# FASCICULE DE BREVET EUROPEEN

(11) **EP 1 072 825 B1**
(45) Date de publication et mention de la délivrance du brevet: **03.03.2004**
(21) Numéro de dépôt: 00401952.7
(22) Date de dépôt: 06.07.2000
(51) Int. Cl.: F16H 63/30

(54) **Dispositif de commande interne d'une boîte de vitesses pour un véhicule automobile**
Schalteinrichtung innerhalb eines Schaltgetriebes für ein Kraftfahrzeug
Shift control means inside a gearbox for a motor vehicle

(30) Priorité: 26.07.1999 FR 9909668
(43) Date de publication de la demande: 31.01.2001
(73) Titulaire: Peugeot Citroen Automobiles SA, 92200 Neuilly sur Seine (FR)
(72) Inventeur: Bertolino, Walter, 78780 Maurecourt (FR)
(74) Mandataire: Thinat, Michel

(56) Documents cités:
- DE-A- 2 409 976
- DE-B- 1 087 911
- FR-A- 2 714 704

## Description

La présente invention concerne un dispositif de commande interne d'une boîte de vitesses pour un véhicule automobile.

On connaît de tels dispositifs qui comprennent d'une manière générale des axes de commande de fourchettes de changement de vitesse agissant sur des manchons de synchroniseur coulissant le long de l'arbre secondaire pour sélectionner le pignon moteur de vitesse correspondante porté par l'arbre primaire. Ce dispositif comprend en outre un pignon intermédiaire de marche arrière porté par un axe et en engrènement avec le pignon moteur de marche arrière qui est porté par l'arbre primaire.

Dans ce genre de dispositifs connus, la géométrie de chaque fourchette et l'implantation de son axe de commande sont un compromis entre le rendement maximum souhaité de cet ensemble, la résistance mécanique de la fourchette et leur intégration dans la boîte de vitesses suivant un encombrement aussi faible que possible.

Or, la proximité du pignon intermédiaire de marche arrière constitue un obstacle à l'implantation des axes de commande des fourchettes dans un sens allant vers le rendement maximum de celles-ci et à leur intégration de façon la plus compacte possible dans la boîte de vitesses, problème s'aggravant lorsque la synchronisation est alternée, c'est-à-dire que les synchros sont sur le primaire et le secondaire.

Diverses solutions ont déjà été proposées pour résoudre ce problème.

L'une de ces solutions consiste à disposer l'un des axes de commande de fourchettes au-dessus du pignon intermédiaire de marche arrière, mais cette disposition se traduit par une distance relativement longue entre cet axe et la crosse de commande de déplacement de celui-ci.

Une autre solution consiste à disposer l'un des axes de commande de fourchettes en dessous du pignon intermédiaire de marche arrière : cette disposition se traduit non seulement par une distance relativement longue entre l'axe de commande et la crosse correspondante, mais également par des becs de fourchette très longs.

Un dispositif selon la revendication 1 est divulgué dans le document DE 24 09 976 A.

La présente invention a pour but d'éliminer les inconvénients ci-dessus des solutions connues en proposant un dispositif de commande interne d'une boîte de vitesses pour un véhicule automobile conçu de façon que le rendement d'une fourchette de changement de vitesse soit augmenté tout en implantant l'axe de commande de la fourchette selon un encombrement aussi réduit que possible sans changer la disposition générale des différents constituants de la boîte de vitesses.

A cet effet, l'invention concerne un dispositif de commande interne d'une boîte de vitesses pour un véhicule automobile du type comprenant notamment des axes de commande de fourchettes de changement de vitesse et un pignon intermédiaire de marche arrière porté par un axe et en engrènement avec le pignon moteur de marche arrière et qui est caractérisé en ce que l'un des axes de commande de fourchettes est monté coaxialement coulissant dans l'axe de support du pignon intermédiaire.

De préférence, l'axe de support du pignon intermédiaire comprend un manchon formant palier de guidage de l'axe de commande de fourchette et solidaire du carter de la boîte de vitesses.

Le pignon intermédiaire est monté à rotation sur le manchon formant palier par l'intermédiaire d'un coussinet.

L'axe de commande est celui de la fourchette de changement des troisième et quatrième vitesses.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est une vue en coupe schématique d'une boîte de vitesses d'un véhicule automobile et dont l'un des axes de commande de fourchettes de changement de vitesse est implanté conformément à l'invention.

La figure 2 est une vue détaillée agrandie de la partie cerclée en II de la figure 1.

La figure 3 est une vue en perspective représentant les dispositions relatives des axes de commande de fourchettes de changement de vitesse résultant de l'implantation de l'un de ces axes de commande conformément à l'invention.

La figure 4 est une vue suivant la flèche IV de la figure 3.

La figure 5 est une vue en perspective de l'implantation, conformément à l'invention, de l'axe de commande de fourchette de changement de vitesse.

Les figures 6 et 7 sont des vues en perspective montrant la compacité obtenue par l'invention des différents constituants de la boîte de vitesses.

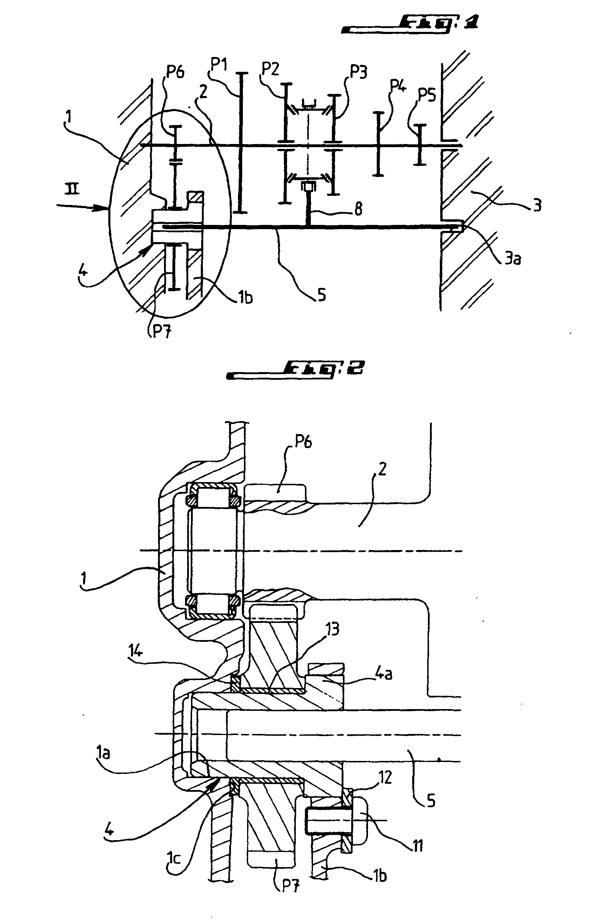

En se reportant tout d'abord à la figure 1, la référence 1 désigne le carter d'une boîte de vitesses pour un véhicule automobile et dans lequel est monté à rotation l'arbre primaire 2 qui porte cinq pignons moteurs de vitesses P1 à P5 correspondant respectivement aux cinquième, quatrième, troisième, seconde et première vitesses.

L'extrémité de l'arbre primaire 2 opposée à celle montée à rotation dans le carter 1 de la boîte de vitesses est également montée à rotation dans le carter 3 de l'embrayage (non représenté) qui permet de solidariser l'arbre primaire 2 à l'arbre moteur.

L'arbre primaire 2 porte également le pignon moteur P6 de marche arrière qui est en engrènement avec le pignon intermédiaire P7 de marche arrière porté par un axe 4 solidaire du carter 1 de la boîte de vitesses.

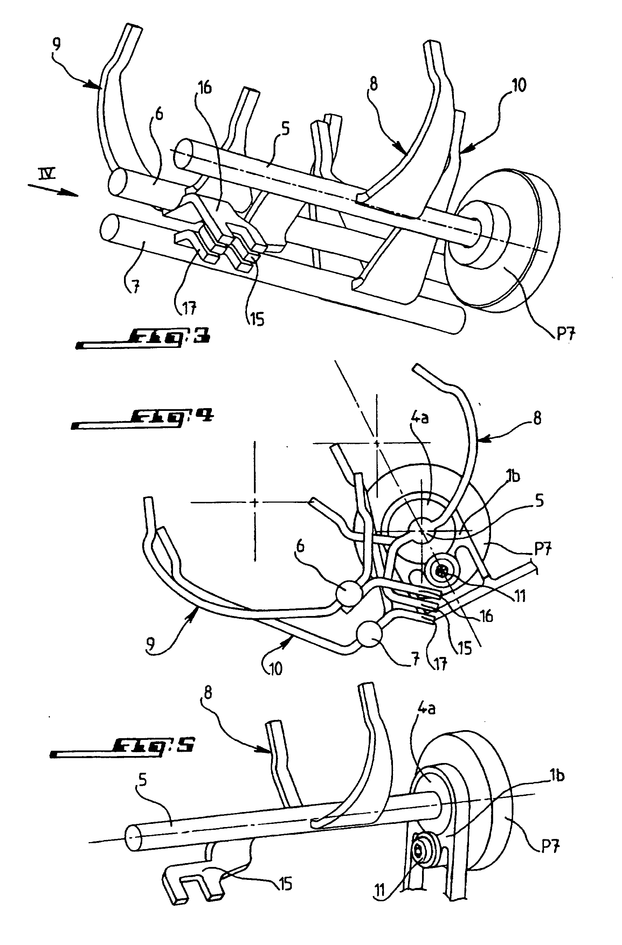

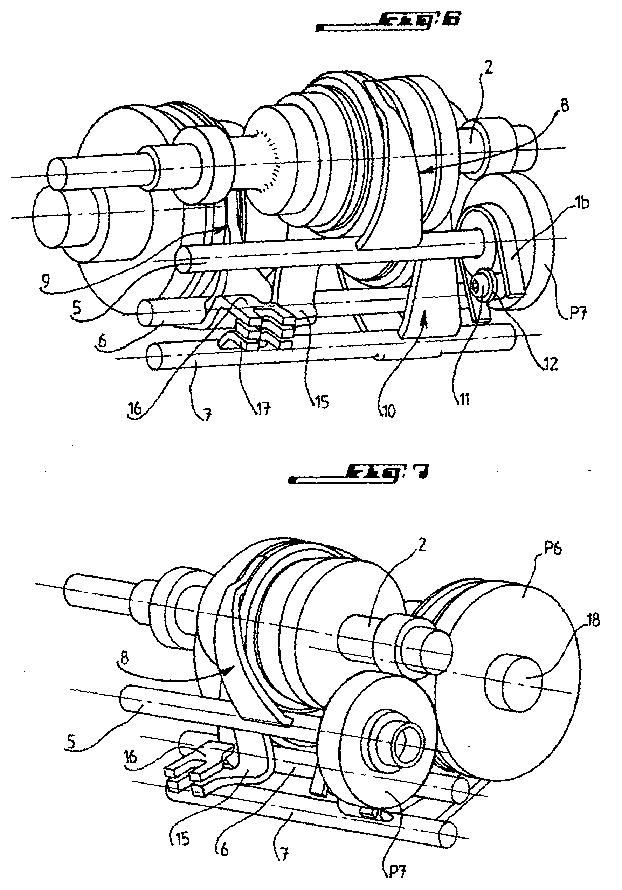

Selon l'invention, comme cela ressort mieux des figures 2 à 7 et notamment de la figure 2, l'un 5 des axes 5-7 de commande respectivement des fourchettes 8-10 de changement de vitesse pouvant coulisser parallèlement à l'arbre primaire 2 est monté, à l'une de ses extrémités, de façon coulissante coaxialement dans l'axe 4 de support du pignon intermédiaire P7. Plus précisément, l'axe 4 est constitué par un manchon formant palier de guidage de l'axe 5, traversant le pignon intermédiaire P7 et s'engageant dans un alésage circulaire la du carter 1. Le manchon 4 comporte, à l'opposé de l'alésage 1a, un collet 4a engagé dans un perçage d'une patte de fixation 1b solidaire du carter 1 perpendiculairement à l'axe 5. Un élément de fixation 11, tel qu'une vis, solidarise une rondelle 12 à la patte de support 1b de façon que la rondelle 12 soit partiellement en appui sur l'extrémité correspondante du collet 4a et empêche tout déplacement axial du manchon 4 relativement au pignon intermédiaire P7. Ce dernier est monté à rotation sur l'axe 4 par l'intermédiaire d'un coussinet 13 et est maintenu axialement d'un côté par le collet 4a et de l'autre côté par une rondelle 14 engagée partiellement dans un lamage correspondant 1c du carter 1. Bien entendu, l'extrémité de l'axe de commande 5 opposée à celle logée dans l'axe 4 est également disposée dans un perçage correspondant 3a du carter d'embrayage 3 de façon à autoriser un déplacement axial de l'axe de commande 5.

Sur les dessins, l'axe de commande qui est monté coulissant relativement à l'axe de support 4 du pignon intermédiaire P7 est celui associé à la fourchette de passage des troisième et quatrième vitesses, mais il est bien entendu qu'il peut s'agir de l'un des deux autres axes de commande 6, 7 des fourchettes de changement de vitesse 9, 10 respectivement des première-seconde vitesses et des cinquième vitesse marche arrière.

L'essentiel est que, comme cela ressort notamment des figures 3, 4, 6 et 7, la disposition relative des axes de commande 5-7 permet d'implanter ces axes et leurs fourchettes associées de façon extrêmement compact sans être gênés par le pignon intermédiaire de marche arrière P7. Ces figures montrent également les crosses 15, 16 et 17 associées respectivement aux axes de commande 5, 6 et 7 et auxquelles est relié mécaniquement le levier de changement de vitesse pour sélectionner une vitesse. L'agencement de l'invention permet ainsi de limiter autant que possible la longueur de ces crosses, notamment celle associée à l'axe de commande 5. Autrement, les autres constituants de la boîte de vitesses qui sont représentés notamment aux figures 6 et 7, tels que par exemple l'arbre secondaire 18, sont connus en soi et n'ont pas besoin d'être détaillés.

Le dispositif de l'invention tel que décrit ci-dessus permet de réaliser l'un des axes de commande avec une fourchette de changement de vitesse moins encombrante, ce qui se traduit par une masse plus faible. En outre, la distance entre cet axe et la crosse de déplacement de celui-ci est relativement courte, ce qui permet d'augmenter le rendement ainsi que la résistance mécanique de l'ensemble. Enfin, les fourchettes de changement de vitesse ainsi que leurs axes de commande s'intégrent mieux dans la boîte de vitesses, aboutissant à un ensemble extrêmement compact.

## Revendications

1. Dispositif de commande interne d'une boîte de vitesses pour un véhicule automobile comprenant notamment des axes (5-7) de commande de fourchettes de changement de vitesse (8-10) et un pignon intermédiaire de marche arrière (P7) porté par un axe (4) et en engrènement avec le pignon récepteur de marche arrière (P6), l'un (5) des axes (5-7) de commande des fourchettes (8-10) ayant l'une de ses extrémités montée coaxialement coulissante dans l'axe de support (4) du pignon intermédiaire (P7), **caractérisé en ce que** ledit axe de support (4) est constitué par un manchon formant palier de guidage de l'extrémité de l'axe (5), traversant le pignon intermédiaire (P7) et s'engageant dans un alésage (1a) du carter (1) de la boîte de vitesses, le manchon (4) comportant, à l'opposé de l'alésage (1a), un collet (4a) solidaire d'une patte de fixation (1b) solidaire du carter (1) perpendiculairement à l'axe (5), et **en ce que** l'extrémité opposée de l'axe (5) est montée également axialement coulissante dans un perçage (3a) du carter d'embrayage (3) du véhicule.

2. Dispositif selon la revendication 1, **caractérisé en ce que** le pignon intermédiaire (P7) est monté à rotation sur le manchon formant palier (4) par l'intermédiaire d'un coussinet (13).

3. Dispositif selon la revendication 1 ou 2, **caractérisé en ce que** l'axe de commande (5) précité est celui de la fourchette (8) de changement des troisième et quatrième vitesses.

## Patentansprüche

1. Schalteinrichtung innerhalb eines Schaltgetriebes für ein Kraftfahrzeug, insbesondere mit Schaltstangen (5-7) zum Schalten der Gangwechselschaltgabeln (8-10) und mit einem Rücklaufzwischenrad (P7), das von einer Achse (4) abgestützt wird und mit dem Rücklaufabtriebsrad (P6) kämmt, wobei die eine (5) der Schaltstangen (5-7) der Schaltgabeln (8-10) mit dem einen Ende koaxial gleitbeweglich in der Tragachse (4) des Zwischenrads (P7) gelagert ist, **dadurch gekennzeichnet, dass** die genannte Tragachse (4) aus einer Lagerhülse zum Führen des Endabschnitts der Schaltstange (5) besteht, welche Hülse das Zwischenrad (P7) durchsetzt und in eine Bohrung (1a) des Gehäuses (1) des Getriebes eingreift, wobei die Hülse (4) entgegengesetzt zur Bohrung (1a) einen Kragen (4a) enthält, der fest mit einer Befestigungslasche (1b) verbunden ist, die fest mit dem Gehäuse (1) senkrecht zur Schaltstange (5) verbunden ist, und dass das gegenüberliegende Ende der Schaltstange (5) auch axial gleitbeweglich in einer Bohrung (3a) des Kupplungsgehäuses (3) des Fahrzeugs gelagert ist.

2. Einrichtung nach Anspruch 1, **dadurch gekennzeichnet, dass** das Zwischenrad (P7) über eine Lagerung (13) drehbar an der Lagerhülse (4) montiert ist.

3. Einrichtung nach Anspruch 1 oder 2, **dadurch gekennzeichnet, dass** die vorgenannte Schaltstange (5) die der Schaltgabel (8) des dritten und vierten Gangs ist.

## Claims

1. Shift control device inside a gearbox for a motor vehicle, comprising in particular control shafts (5-7) for gear shift fork (8-10) and an intermediate reversing pinion (P7), supported by a shaft (4) and meshed with the reversing receiver pinion (P6), **characterised in that** since one (5) of the control shafts (5-7) for the forks (8-10) has one of its mounted coaxially sliding in the support shaft (4) of the intermediate pinion (P7), said support shaft (4) of the intermediate pinion (P7) consists of a sleeve forming a guide bearing for the end of the shaft (5), crossing the intermediate pinion (P7) and engaging in a bore (1a) of the gearbox casing (1), wherein the sleeve (4), opposite the bore (1a), comprises a collar (4a) integral with a fixing leg (1b) integral with the case (1) and perpendicular with the shaft (5), and **in that** the opposite end of the shaft (5) is also mounted axially sliding in a hole (3a) in the clutch casing (3) of the vehicle.

2. Device according to claim 1, **characterised in that** the intermediate pinion (P7) is mounted rotatably on the sleeve forming the bearing (4) by means of a bearing (13).

3. Device according to claim 1 or 2, **characterised in that** said control shaft (5) is that of the shift fork (8) for the third and fourth gears.
